# EUROPEAN PATENT SPECIFICATION

(11) **EP 3 914 668 B1**
(45) Date of publication and mention of the grant of the patent: **13.05.2026**
(21) Application number: 20744550.3
(22) Date of filing: 22.01.2020
(51) Int. Cl.: C09K 11/77, C09K 11/02, B42D 25/29, B42D 25/382, B42D 25/20, C09D 11/50, C09D 11/037

(54) **NEAR INFRARED LUMINESCENT MATERIAL EXCITED BY NEAR INFRARED RAY**
DURCH NAHINFRAROTSTRAHLEN ANGEREGTES NAHINFRAROT-LUMINESZENTES MATERIAL
MATÉRIAU À LUMINESCENCE INFRAROUGE PROCHE EXCITÉ PAR UN RAYONNEMENT INFRAROUGE PROCHE

(30) Priority: 25.01.2019 KR 20190009903
(43) Date of publication of application: 01.12.2021
(73) Proprietor: Nano CMS Co., Ltd., Cheonan-si, Chungcheongnam-do 31040 (KR)
(72) Inventor: KIM, Shi Surk, Cheonan-Si Chungcheongnam-do 31066 (KR); KIM, Si Bo, Cheonan-si Chungcheongnam-do 31099 (KR); LEE, Sang Geun, Daejeon 34139 (KR)
(74) Representative: Groth & Co. KB
(86) International application number: PCT/KR2020/001120
(87) International publication number: WO 2020/153762

(56) References cited:
- EP-A1- 1 577 365
- EP-A1- 1 865 044
- WO-A1-03/104533
- CN-A- 107 312 539
- JP-B2- 4 020 408
- KR-A- 19980 027 003
- KR-A- 20160 045 789
- KR-B1- 102 027 444
- US-B2- 9 409 434

## Description

### Technical Field

The teachings in accordance with exemplary and non-limiting embodiments of this invention relate generally to near infrared luminescent material excited by near infrared ray and method of manufacturing the same, and more particularly, to a near infrared luminescent material excited by a light of near infrared ray region and luminescent of infrared light, and a method of manufacturing the same.

### Background Art

The fluorescent material printed on bank notes or checks for anti-forgery of domestic and foreign bank notes for being luminescent of fluorescent light by ultraviolet light can be a bit easily obtained by anybody who has interest therein, consistent with overall progress of industrial technologies, and may be utilized by a UV lamp whereby the fluorescence printed on bank notes can be easily ascertained, and the trend is that magnetic ink is also commonly used on conventional printed materials, and therefore, it can be said that there is room for the fluorescent material to be used for forgery.

Thus, in order to prevent forgery of special printed materials such as bank notes, negotiable securities and other security documents, it can be expected that forgery prevention and authenticity may be established when non-visible luminescent material which emits infrared rays invisible in light emission to naked eyes is printed on special printed materials including bank notes and negotiable securities in a small area within 10mm².

The Korean Laid-Open Patent Application No. 1998-027003 (July 15, 1998) of prior art relates to "Non-visible luminescent material and method thereof", disclosing a non-visible luminescent material having a molecular formula of Y₂SiV₂O₁₀:Nd⁺³, Er⁺³ and manufacturing method thereof, in which yttrium compound, silicone compound and vanadium compound oxide are used as matrix, and Nd₂O₃ and Er₂O₃ are added thereto as an activation agent, and equally mixed, plasticized for 3-5 hours under 600-700°C in oxidative atmosphere as a first step reaction, pulverized to a diameter of 5-15µm, and as a second step reaction, the pulverized material is plasticized to a diameter of 2-4µm for 3-5 hours under 1000-1200°C, and as a third step reaction, the second step reactant is plasticized for 1-3 hours under 500-700°C for 1-3 hours and crushed to the size of about 1µm.

The said prior art of Korean application failed to disclose the configuration of infrared luminescent material excited by infrared ray, although a configuration of emitting infrared light when irradiated by UV light and visible light is disclosed.

Furthermore, the Korean Laid-Open patent application No. 2010-0110068 of prior art relates to "luminescent material and manufacturing method thereof", and discloses the light characteristic of emitting a light excited by visible light, and the Korean registered patent application No.1238197 relates to "non-visible luminescent material and manufacturing method thereof" and discloses luminescent material excited by a light of UV ray region to emit a light of infrared ray region.

In addition, the Korean registered patent application No. 0959362 relates to "luminescent material and manufacturing method thereof", and discloses that, because there has been difficulty in mass production of luminescent materials excited by visible light to emit infrared ray such as Gd₂O₂S:Er(1550 nm), NaYW₂O₆:Er (1550 nm), CaF₂:Er,Yb(980 nm, 1550 nm) due to low yield, and difficulty in cohesion and powderization, calsium in CaMoO₄ luminescent material is partially replaced by magnesium or zinc, in order to solve these problems, and one or two species of lanthanide metals selected from a group consisting of Nd³⁺, Yb³⁺ and Er³⁺ are used as activation agents to manufacture luminescent material excellent in luminescent characteristics emitting an infrared light excited by visible light.

However, the prior patents also failed to disclose a luminescent material excited by infrared ray.

Thus, needs to develop a low-cost, detection sensitivity-excellent infrared or near infrared luminescent material concurrently useable as silicon and InGaAs detector are requested, configured to be excited by a light of infrared or near infrared ray region to thereby emit a light of infrared or near infrared ray for use as a commercialized infrared LED light source.

US 9 409 434 B2 discloses a silicate luminescent material according to the general formula Y_{2-5z}(Nd₁Yb₄)_{z}SiO₅, for use in a security feature.

### Disclosure of invention

### Technical Problem

Therefore, it is an object of the present invention to provide a near infrared luminescent material excited by near infrared ray for emission of a light of near infrared ray.

It is another object of the present invention to provide a near infrared luminescent material excited by near infrared ray and adequate for prevention of forgery and alteration, and a method of manufacturing the same.

### Solution to Problem

In one general aspect of the present invention, there is provided a luminescent material which is a compound expressible by the following chemical formula:

YbₐYₓV_{y}Si_{z}O₄: M

where, 0 <a≤ 1, 0 < X ≤ 1, 0 < Y ≤ 1, 0 < Z ≤ 1,
M is Nd³⁺ or Er³⁺, and 0 weight% < M ≤ 0.01 weight%.

Preferably, but not necessarily, the compound of luminescent material by the formulae may be excited by IR (Infrared) to emit an IR ray.

In another general aspect of the present invention, there is provided a forgery/alteration preventive security ink containing 0.1 ~ 25 weight% of the inventive luminescent material based on a total weight of the ink.

In still another general aspect of the present invention, there is provided a printed matter containing 0.1 ~ 25 weight% of the inventive luminescent material based on a total weight of the printed matter, and printable as a printing object on printing material of paper or polymeric film.

In still further general aspect of the present invention, there is provided a printing material of paper or polymeric film containing 0.1 ~ 25 weight% of the inventive luminescent material based on a total weight of the printing material of paper or polymeric film.

In still further general aspect of the present invention, there is provided the said paper selected from a group consisting of bank note paper, gift card paper and general paper, and the polymeric film selected from a group consisting of polycarbonate, polyester, polyethylene, polypropylene, ABS (acrylonitrile butadiene styrene) and SAN (styrene-acrylonitrile).

### Advantageous Effects of Invention

A near infrared luminescent material manufactured by a manufacturing method described below is excited by a light of near infrared ray region to emit a light of near infrared ray, whereby a commercialized infrared LED may be used as a light source, and a low-cost, detection sensitivity-excellent silicon and InGaAs detector can be used for detection, such that the near infrared luminescent material can be used for special printed matters using a polymeric film, paper and security ink for the purpose of convenient and low-cost forgery and alteration prevention.

### Brief Description of Drawings

- FIG. 1: is a luminescent wavelength spectrum obtained through exemplary embodiments 1, 2 and 3.
- FIG. 2: is a luminescent wavelength spectrum obtained through exemplary embodiments 1, 1-1 and 1-2.
- FIG. 3: is a luminescent wavelength spectrum obtained through exemplary embodiments 1, 2-1 and 2-2.
- FIG. 4: is a luminescent wavelength spectrum obtained through exemplary embodiments 3, 3-1 and 3-2.
- FIG. 5: is a luminescent wavelength spectrum of specimen obtained through a second exemplary embodiment using an Edinburgh analytical instrument.
- FIG. 6: is an XRF analytic data obtained through a first exemplary embodiment.
- FIG. 7: is an XRF analytic data obtained through a second exemplary embodiment.
- FIG. 8: is an XRF analytic data obtained through a third exemplary embodiment.

### Best Mode for Carrying out the Invention

Reference will now be made in detail to the preferred embodiments of the present invention, examples of which are illustrated in the accompanying drawings. Wherever possible, the same reference numbers will be used throughout the drawings to refer to the same or like parts. As used herein, the suffixes "module" and "unit" are added or interchangeably used to facilitate preparation of this specification and are not intended to suggest unique meanings or functions. In describing embodiments disclosed in this specification, a detailed description of relevant well-known technologies may not be given in order not to obscure the subject matter of the present invention. In addition, the accompanying drawings are merely intended to facilitate understanding of the embodiments disclosed in this specification. In addition, the accompanying drawings should be understood as covering all equivalents or substitutions within the scope of the present invention.

Terms including ordinal numbers such as first, second, etc. may be used to explain various elements. However, it will be appreciated that the elements are not limited to such terms. These terms are merely used to distinguish one element from another.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.).

As used herein, the singular forms "a", "an", and "the" are intended to include the plural forms as well, unless context clearly indicates otherwise.

Furthermore, the terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof.

Now, exemplary embodiments of the present disclosure will be described in detail with reference to the accompanying drawings. Only embodiments where the luminescent material is according to chemical formula 3, where, 0 < a ≤ 1, 0 < X ≤ 1, 0 < Y ≤ 1, 0 < Z ≤ 1, M is Nd³⁺ or Er³⁺, and 0 weight% < M ≤ 0.01 weight%, are claimed.

A method for manufacturing a near infrared luminescent material excited by near infrared ray according to an exemplary embodiment of the present invention may comprise:
a) mixing, as host material, a compound including ytterbium salt, yttrium salt, silicon salt and vanadium salt or a compound including ytterbium, yttrium oxide, silicon dioxide and vanadium oxide with one or more species of a lanthan metal oxide selected from a group comprising Nd³⁺ and Er³⁺ as an activation agent (M) or metal, or proceeding without an activation agent;
b) increasing the temperature of compounds obtained from a) step and heat-treating at 900 ~ 1100 °C to manufacture a luminescent powder; and
c) crushing the luminescent powder using a crusher.

Here, the a) step may further comprise: homogenizing the obtained compounds by inserting the obtained compounds into a mixed solution of ethanol and water and agitating the obtained/inserted compounds.

Furthermore, if necessary, the step of homogenizing the obtained compounds by inserting into a mixed solution of ethanol and water and agitating the obtained/inserted compounds may further include: adjusting a pH value to be 7.0 ~ 7.5 by further adding a strong base solution into the mixed solution.

In order to obtain a luminescent material of excellent luminescent efficiency, it is preferable that the said b) step include manufacturing a luminescent powder by heat-treating the temperature at 250 ~ 300 °C and heat-treating the compounds at increased temperature of 900 ~ 1100 °C.

In the exemplary embodiment host materials such as Yb₂O₃, Y₂O₃,SiO₂ and NH₄VO₃, were used, and Nd(NO₃)₃·5H₂O was used as activation agent to manufacture a near infrared luminescent material of chemical formula 1 (See exemplary embodiment 1 and 1-2).

Furthermore, a near infrared luminescent material of chemical formula 1 without an activation agent is disclosed. That is, while Yb₂O₃, Y₂O₃,SiO₂ and NH₄VO₃ were used as host materials, the near infrared luminescent material of chemical 1 was manufactured without an activation agent (See exemplary embodiment 1-1).

[Chemical formula 1] YbY_{X}V_{Y}Si₂O₇: M

where, 0<X≤1, 0<Y≤1 ,
M is Nd³⁺ or Er³⁺, 0 weight% ≤M ≤0.01 weight%.

A near infrared luminescent material of the following chemical formula 2 according to another exemplary embodiment was manufactured by using Yb₂O₃, Y₂O₃, SiO₂ and NH₄VO₃ as host materials, and using Nd(NO₃)₃·5H₂O as activation agent (See exemplary embodiments 2 and 2-2). Furthermore, a near infrared luminescent material of chemical formula 2 without activation agent is disclosed.

That is, while Yb₂O₃, Y₂O₃, SiO₂ and NH₄VO₃ were used as host materials, the near infrared luminescent material of chemical formula 2 was manufactured without an activation agent (See exemplary embodiment 2-1).

[Chemical formula 2] Yb₂₋ₓY_{y}V_{Z}Si₂O₇: M
where, 0<X≤1, 0<Y≤1 and 0<Z≤1,
M is Nd³⁺ or Er³⁺, 0 weight% ≤ M ≤0.01 weight%.

A near infrared luminescent material of the following chemical formula 3 according to an exemplary embodiment of the invention was manufactured (See exemplary embodiments 3 and 3-2). Furthermore, a near infrared luminescent material of chemical formula 3 without activation agent is disclosed (See exemplary embodiment 3-1).

[Chemical formula 3] YbₐYₓV_{y}Si_{z}O₄: M

where, 0 <a≤ 1, 0 < X≤ 1, 0 < Y ≤ 1 and 0 < Z ≤ 1,
M is Nd^{3+,} 0 weight% < M ≤ 0.01 weight% .

Meantime, the luminescent material may be characterized by the fact that compounds of chemical formula 1, 2 or 3 are excited by near IR (infrared) ray to emit a light of near infrared ray.

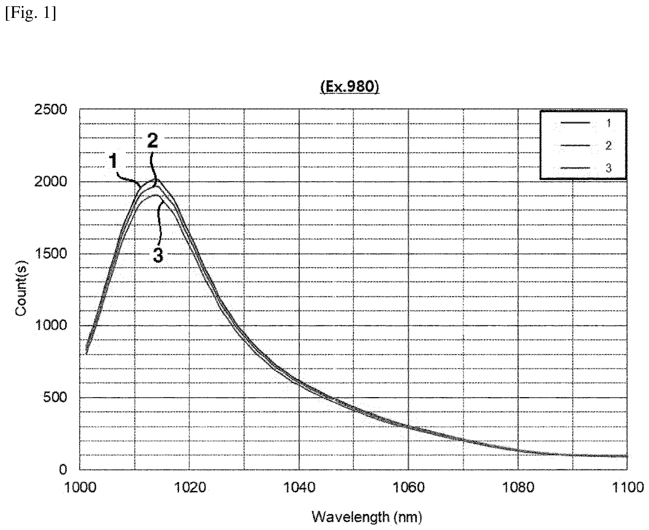

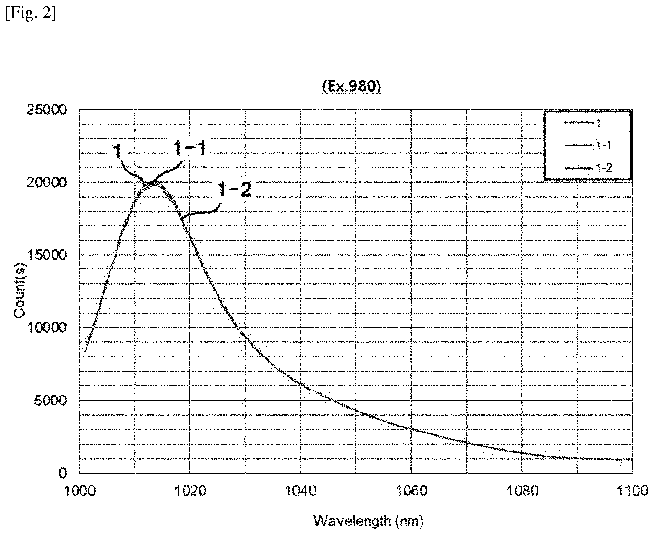

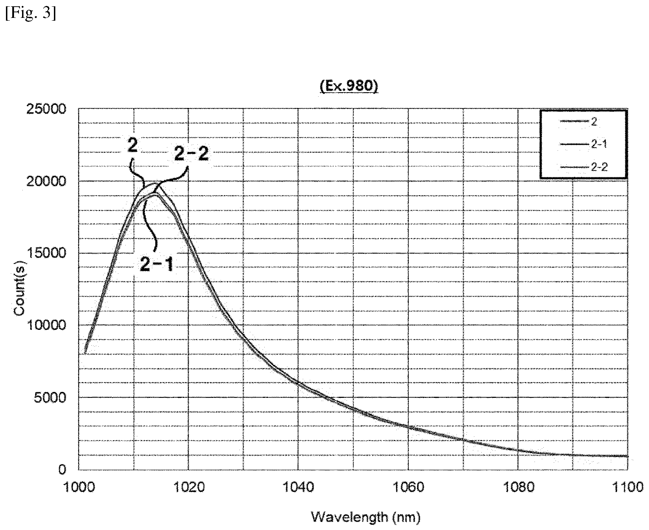

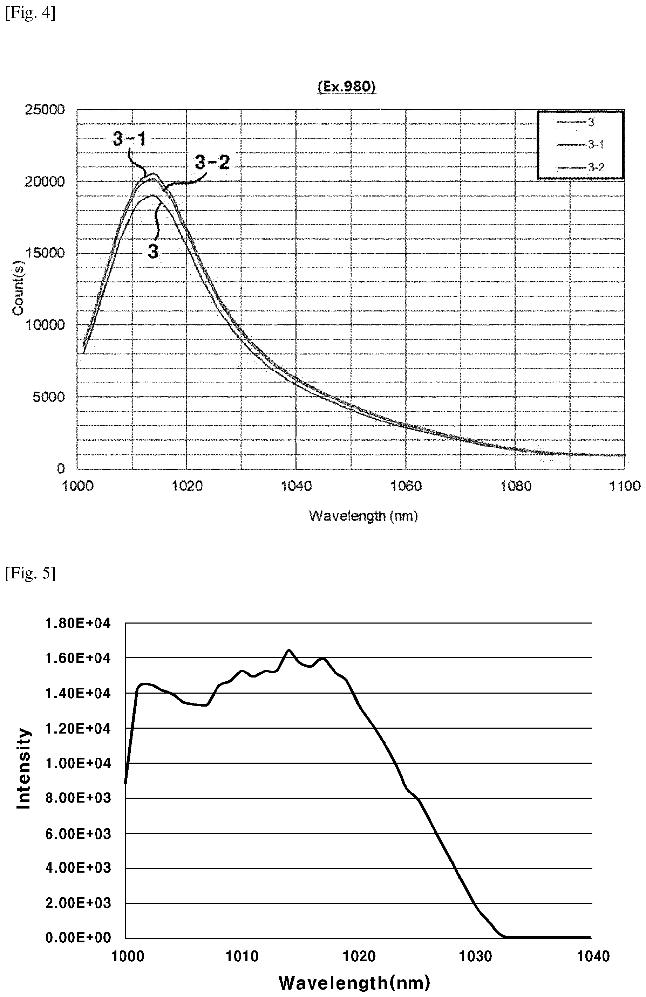

Referring to FIGS. 1 to 5, FIG. 1 is a luminescent wavelength spectrum obtained through exemplary embodiments 1, 2 and 3, FIG. 2 is a luminescent wavelength spectrum obtained through exemplary embodiments 1, 1-1 and 1-2, FIG. 3 is a luminescent wavelength spectrum obtained through exemplary embodiments 1, 2-1 and 2-2, and FIG. 4 is a luminescent wavelength spectrum obtained through exemplary embodiments 3, 3-1 and 3-2.

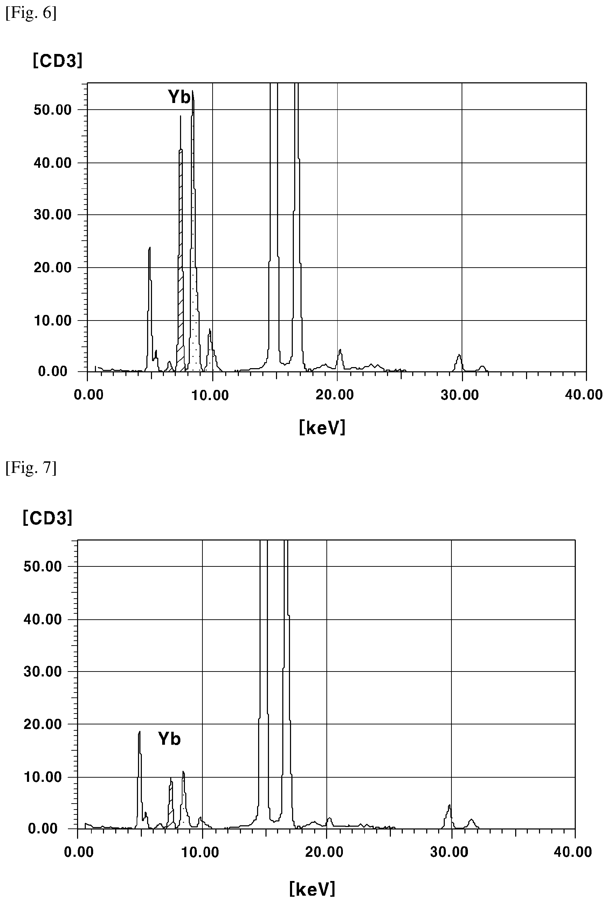

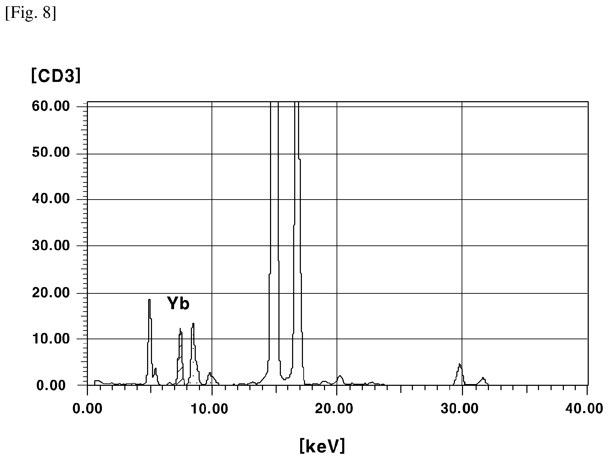

Furthermore, FIG. 5 is a luminescent wavelength spectrum of specimen obtained through a second exemplary embodiment using an Edinburgh analytical instrument, FIG. 6 is an XRF analytic data obtained through a first exemplary embodiment, FIG. 7 is an XRF analytic data obtained through a second exemplary embodiment, and FIG. 8 is an XRF analytic data obtained through a third exemplary embodiment.

The forgery/alteration preventive security ink according to the present invention may contain 0.1 ~ 25 weight% of the luminescent material based on a total weight.

A near infrared luminescent material manufactured by the manufacturing method of the present invention is excited by a light of near infrared region to emit a light of near infrared ray, whereby a generally commercialized infrared LED may be used as a light source, and a silicon and InGaAs detector relatively low in cost and excellent in detection sensitivity may be used, such that the near infrared luminescent material manufactured by the manufacturing method of the present invention can be conveniently used for special printed matters including polymeric film, paper and security ink for prevention of forgery and alteration with low cost over the conventional luminescent material having excitation and luminescent physical properties of other electromagnetic wave regions.

The near infrared luminescent material by chemical formulae 1, 2 and 3 may function to be irradiated on printed matters or security materials included in printing materials. Here, the printed materials mean printed materials printed with printing objects and may include printed materials such as bank notes and gift certificates. Furthermore, the printed materials may include materials prior to being printed with printing objects and may include paper and polymeric film. To be more specific, the paper may include paper for bank notes, paper for gift certificates and general common paper, and the polymeric film may include various films manufactured by and with polycarbonate, polyester, polyethylene, polypropylene, ABS (acrylonitrile butadiene styrene) and SAN (styrene-acrylonitrile).

Here, SAN may be SAN resin, which is copolymer resin manufactured by polymerization of SM and AN, and ABS (acrylonitrile butadiene styrene) is thermoplastic resin and manufactured by mixing SAN (styrene-acrylonitrile) with rubber (generally butadiene) component.

Hereinafter, although the present invention will be further described in detail through exemplary embodiments, the following exemplary embodiments are merely provided for explanation and do not limit the scope of the instant invention.

### (Exemplary embodiments〉

### Exemplary embodiments 1, 1-1 and 1-2 (not according to the invention)

1) Each used raw materials described in the following Table 1 are mixed and homogenized based on Yb₂O₃, Y₂O₃, SiO₂, NH₄VO₃ weight% ratio.

**[Table 1]**

| Raw material name | Molecular weight | | Exemplary embodiment 1 | Exemplary embodiment 1-1 | Exemplary embodiment 1-2 |
|---|---|---|---|---|---|
| Yb₂O₃ | 173.04 | 397.94 | 36.25gr | 36.25gr | 36.25gr |
| Y₂O₃ | 88.90 | 225.84 | 32.43gr | 32.43gr | 32.43gr |
| SiO₂ | 28.08 | 60.08 | 11.98gr | 11.98gr | 11.98gr |
| NH₄VO₃ | 50.94 | 116.98 | 42.41gr | 42.41gr | 42.41gr |
| Nd(NO₃)₃·5H₂ O | 144.24 | 420.34 | 0.84gr | - | 0.012gr |

2) Water of 35 ml is inserted into each beaker, 0.84g of Nd(NO₃)₃·5H₂O for exemplary embodiment 1 and 0.012g of Nd(NO₃)₃·5H₂O for exemplary embodiments 1-2 are inserted, where the exemplary embodiment 1-1 is performed by being solved and agitated without insertion of activation agent of Nd(NO₃)₃·5H₂O.
3) Then, the luminescent material was manufactured with the following steps.
4) A homogenized 1) powder is mixed in a four-neck flask containing a mixed solution of ethanol 300 ml and water 400ml for implementation of exemplary embodiment 1, and The 2) raw materials prepared from each of the exemplary embodiments 1-1 and 1-2 are slowly inserted and agitated in each of the four-neck flasks, agitated for one hour and homogenized.
5) If necessary, the 2) solution is adjusted using NaOH (1M) solution to allow a pH value to be 7.0~7.5.
6) The mixed solution adjusted at the 3) step is agitated at 60~ 85°C for 4 ~ 12 hours and cooled to below 30°C to allow the mixture to be filtered, and cleaned using ethanol and distilled water.
7) The obtained material at the 6) step is dried at 105 °C.
8) The obtained material is put into an electric furnace, heat-treated at 300 °C for an hour, increased in temperature to 900~1000 °C, heat-treated with hot temperature for 4~6 hours and then cooled to a room temperature.
9) The ethanol or water 500 ml is inserted with 100g obtained from the above 8) step, and matched in a center medium value to 3µm using 1mm bead and attrition mill.
10) The solution obtained from the 9) step is spray-dried at 180~190°C to obtain YbY_{X} V_{Y} Si₂O₇: M (0<X≤1, 0<Y≤1, where M in the chemical formula is one element of Nd³⁺, Er³⁺, and 0 weight% ≤M ≤ 0.01 weight%).

Particles of the manufactured luminescent material powder crushed using a disk mill were smaller than 5*µ*m in terms of average size, and as a result of measurement of manufactured luminescent material using a photo luminescence device (manufactured by PSI), the particles demonstrated an excitation by near infrared ray and near infrared luminescence.

It was confirmed that the specimen obtained by the foregoing methods has a maximum excitation wavelength of 980nm by being excited at 800~1200nm using the said photo luminescence device, whereby the following Table 2 is provided to describe the luminescence illuminating at a luminescent wavelength of 1015nm under a condition of Slit: 2 and integrating time of five (5) seconds by being irradiated with 980nm.

**[Table 2]**

| | Exemplary embodiment 1 | Exemplary embodiment 1-1 | Exemplary embodiment 1-2 |
|---|---|---|---|
| Luminescent strength (1015nm) intensity | 480 | 450 | 465 |

The luminescent material manufactured by the manufacturing method may be characterized by the fact of being excited by near infrared ray, and luminescent by the near infrared, and the color of luminescent material itself being of white to thereby allow the luminescent material to be used for ink, sensors, signal lights or detection devices.

### Exemplary embodiments 2, 2-1 and 2-2 (not according to the invention)

1) Each used raw materials described in the following Table 3 are mixed and homogenized based on Yb₂O₃, Y₂O₃, SiO₂, NH₄VO₃ weight ratio.

**[Table 3]**

| Raw material name | Molecular weight | | Exemplary embodiment 2 | Exemplary embodiment 2-1 | Exemplary embodiment 2-2 |
|---|---|---|---|---|---|
| Yb₂O₃ | 173.04 | 397.94 | 56.80 | 56.80 | 56.80 |
| Y₂O₃ | 88.90 | 225.84 | - | - | - |
| SiO₂ | 28.08 | 60.08 | 30.16 | 30.16 | 30.16 |
| NH₄VO₃ | 50.94 | 116.98 | 27.03 | 27.03 | 27.03 |
| Er(NO₃)_{3·}5H₂ O | 167.26 | 443.37 | - | - | - |
| Nd(NO₃)₃·5H₂ O | 144.24 | 420.34 | 0.84 g | - | 0.011 |

2) Water 35ml is put into each beaker, 0.84g of Nd(NO₃)₃·5H₂O in the exemplary embodiment 2 and 0.011g in the exemplary embodiment 2-2 are inputted while being agitated and solved without the activation agent of Nd(NO₃)₃·5H₂O in the exemplary embodiment 2-1.
3) Then, the luminescent material was manufactured according to the following steps:
4) Homogenized 1) powder is mixed in a four-neck flask containing a mixed solution of ethanol 300 ml and water 400ml, and used for the exemplary embodiment 2, and 2) raw materials respectively prepared by the exemplary embodiments 2-1 and 2-2 are respectively agitated and slowly inputted into the four-neck flask, and agitated for an hour for homogenization.
5) If necessary, the 2) solution is adjusted using NaOH (1M) solution to allow a pH value to be 7.0~7.5.
6) The mixed solution adjusted at the 3) step is agitated at 60~ 85°C for 4 ~ 12 hours and cooled to below 30°C to allow the mixture to be filtrated, and cleaned using ethanol and distilled water.
7) The obtained material at the 6) step is dried at 105 °C.
8) The obtained material is put into an electric furnace, heat-treated at 300 °C for an hour, increased in temperature to 900~1000 °C, heat-treated with hot temperature for 4~6 hours and then cooled to a room temperature.
9) The ethanol or water 500 ml is inserted with 100g obtained from the above 8) step, and matched in a center medium value to 3µm using 1mm bead and attrition mill.
10) The solution obtained from the 9) step is spray-dried at 180~190°C to obtain Yb₂₋ₓY_{y}V_{Z}Si₂O₇: M (0<X≤1.0, 0<Y≤1.0, 0<Z≤1.0, and M in the chemical formula is one element of Nd³⁺, Er³⁺, and 0.00 weight % ≤ M ≤ 0.01 weight%).

It was confirmed that the specimen obtained by the foregoing methods has a maximum excitation wavelength of 980nm by being excited at 800~1200nm using a photo luminescence device (manufactured by Edinburgh Instruments, Model No: FLS970), whereby the following Table 4 is provided to describe the luminescence illuminating at a luminescent wavelength of 1015nm by being irradiated at 980nm.

**[Table 4]**

| | Exemplary embodiment 2 | Exemplary embodiment 2-1 | Exemplary embodiment 2-2 |
|---|---|---|---|
| Luminescent strength(1015nm) intensity | 1.6 * 10⁴ | 1.6 * 10⁴ | 1.55 * 10⁴ |

### Exemplary embodiments 3, 3-1 and 3-2 (only embodiments 3 and 3-2 are according to the invention)

1) Each used raw materials described in the following Table 5 are mixed and homogenized based Yb₂O₃, Y₂O₃, SiO₂, NH₄VO₃ weight% ratio.

**[Table 5]**

| Raw material name | Molecular weight | | Exemplary embodiment 3 | Exemplary embodiment 3-1 | Exemplary embodiment 3-2 |
|---|---|---|---|---|---|
| Yb₂O₃ | 173.04 | 397.94 | 36.25gr | 36.25gr | 36.25gr |
| Y₂O₃ | 88.90 | 225.84 | 32.43gr | 32.43gr | 32.43gr |
| SiO₂ | 28.08 | 60.08 | 5.99gr | 5.99gr | 5.99gr |
| NH₄VO₃ | 50.94 | 116.98 | 42.41gr | 42.41gr | 42.41gr |
| Nd(NO₃)₃·5H₂O | 144.24 | 420.34 | 0.84gr | - | 0.012gr |

2) Water 35ml is put into each beaker, 0.84g of Nd(NO₃)₃·5H₂O in the exemplary embodiment 3 and 0.012g in the exemplary embodiment 3-2 are inputted while being agitated and solved without the activation agent of Nd(NO₃)₃·5H₂O in the exemplary embodiment 3-1.
3) Then, the luminescent material was manufactured according to the following steps:
4) Homogenized 1) powder is mixed in a four-neck flask containing a mixed solution of ethanol 300 ml and water 400ml, and used for the exemplary embodiment 3, and 2) raw materials respectively prepared by the exemplary embodiments 3-1 and 3-2 are respectively agitated and slowly inputted into the four-neck flask, and agitated for an hour for homogenization.
5) If necessary, the 2) solution is adjusted using NaOH (1M) solution to allow a pH value to be 7.0~7.5.
6) The mixed solution adjusted at the 3) step is agitated at 60~ 85°C for 4 ~ 12 hours and cooled to below 30°C to allow the mixture to be filtrated, and cleaned using ethanol and distilled water.
7) The obtained material at the 6) step is dried at 105 °C.
8) The obtained material is put into an electric furnace, heat-treated at 300 °C for an hour, increased in temperature to 900~1100 °C, heat-treated with hot temperature for 4~6 hours and then cooled to a room temperature.
9) The ethanol or water 500 ml is inserted with 100g obtained from the above 8) step, and matched in a center medium value to 3*µ*m using 1mm bead and attrition mill.
10) The solution obtained from the 9) step is spray-dried at 180~190°C to obtain YbY_{X} V_{Y}Si_{Z}O₄ : M (Ybₐ Y_{X} V_{Y} Si_{Z}O₄ : M (0 ≤a≤ 1, 0 ≤ X ≤ 1, 0 ≤ Y ≤ 1 , 0 ≤ Z ≤ 1, and M is one of element of Nd³⁺, Er³⁺ and 0.00 weight% ≤ M ≤ 0.01 weight%).

The average particle size of particles crushed from the manufactured luminescent material powder by disk mill was 5µm, and as a result of measurement on the manufactured luminescent material using a photo luminescence device (Laser Photo Luminescence, manufactured by PSI), the excitation by the near infrared ray and luminescence of near infrared ray are shown in the following Table 6. In addition, XRF pattern as a result of XRF analysis using X-RAY was confirmed to be a high angle shifted.

It was confirmed that the specimen obtained by the foregoing methods has a maximum excitation wavelength of 980nm by being excited at 800~1200nm, whereby the following Table 6 is provided to describe the luminescence illuminating at a luminescent wavelength of 1015nm by being irradiated at 980nm.

**[Table 6]**

| | Exemplary embodiment 3 | Exemplary embodiment 3-1 | Exemplary embodiment 3-2 |
|---|---|---|---|
| Luminescent strength(1015nm) intensity | 2000 | 2200 | 2120 |

The luminescent material manufactured by the manufacturing method may be characterized by being excited by near infrared ray and by being luminescent at a near infrared, where the color of luminescent material itself is white, and the luminescent material may be used for ink, sensors, signal lights or detection devices.

### Applicable examples

In order to review the applicability of luminescent material to security films, a 100µm film was obtained by mixing a 3*µ*m level of powdered body obtained from the above exemplary embodiment with polycarbonate compound of 0,1 w/w % using 320°C of extruder. A result is shown in the following Table 7, which was obtained by analyzing the luminescent strength (applied detector was developed by NANOCMS. See FIG. 9) at 980nm using a specimen of a thick sheet obtained by using a 320°C hot plate made from overlapped 10 sheets of films.

**[Table 7]**

| Applicable example | Blank Test | Exemplary embodiment specimen | Luminescent strength: Intensity |
|---|---|---|---|
| 1 | | 1 | 960~970 |
| 2 | | 1-1 | 940 |
| 3 | | 1-2 | 945 |
| 4 | | 2 | 990~1009 |
| 5 | Not detected | 2-1 | 995 |
| 6 | | 2-2 | 975 |
| 7 | | 3 | 968~975 |
| 8 | | 3-1 | 1065 |
| 9 | | 3-2 | 1001 |

In order to review the applicability of the luminescent material to a security ink, the luminescent materials of 3*µ*m level obtained from the above applicable examples 1~9 are mixed with alkyd resin according to the weight ratios of the following Table 8 (addition ratios of exemplary embodiments being of respectively 10%, 15%, 25% based on a total weight ratio in which alkyd resin and addition amounts of exemplary embodiments are mixed) using a Hoover mill at a pressure of 3.375Kg, rotated by 50 times, which is then implemented four times to manufacture an ink, which is then printed and measured, the result of which is shown by the following Table 8.

**[Table 8]**

| clas sific atio n | alkyd resin | Exemplary embodiment amount (total weight ratio) | Applicable example | | | | | | | | |
|---|---|---|---|---|---|---|---|---|---|---|---|
| | | | 10 | 11 | 12 | 13 | 14 | 15 | 16 | 17 | 18 |
| Lu mini scen t stre ngth | 0.90 | 0.10(10%) | 895 | 910 | 905 | 896 | 915 | 910 | 894 | 908 | 913 |
| | 0.85 | 0.15(15%) | 1350 | 1402 | 1365 | 1353 | 1366 | 1365 | 1368 | 1375 | 1355 |
| | 0.75 | 0.25(25%) | 1935 | 2070 | 2042 | 1910 | 1925 | 1906 | 2066 | 2065 | 2047 |

Meantime, the abovementioned Detailed Description should not be construed as limiting but considered as exemplary.

## Claims

1. A luminescent material which is a compound expressible by the following chemical formula:
YbₐYₓV_{y}Si_{z}O₄: M
where, 0 < a ≤ 1, 0 < X ≤ 1, 0 < Y ≤ 1, 0 < Z ≤ 1,
M is Nd³⁺ or Er³⁺, and 0 weight% < M ≤ 0.01 weight%.

2. The luminescent material of claim 1, wherein the compound of luminescent material expressible by the formula is excited by IR (Infrared) to emit an IR ray.

3. A forgery/alteration preventive security ink containing the luminescent material of claim 1, wherein the ink includes 0.1 ~ 25 weight% of the luminescent material based on a total weight of the ink.

4. A printed matter containing the luminescent material of claim 1, wherein the printed matter includes 0.1 ~ 25 weight% of the luminescent material based on a total weight of the printed matter, and the luminescent material is printable as a printing object on printing material of paper or polymeric film.

5. A printing material of paper or polymeric film containing the luminescent material of claim 1, wherein the printing material of paper or polymeric film includes 0.1 ~ 25 weight% of the luminescent material based on a total weight of the printing material of paper or polymeric film.

6. The said paper of claim 5, wherein the paper is selected from a group consisting of bank note paper, gift card paper and general paper, and the polymeric film is selected from a group consisting of polycarbonate, polyester, polyethylene, polypropylene, ABS (acrylonitrile butadiene styrene) and SAN (styrene-acrylonitrile).

## Patentansprüche

1. Lumineszierendes Material, das eine Verbindung ist, die durch die folgende chemische Formel ausgedrückt werden kann:
YbₐYₓV_{y}Si_{z}O₄: M
wobei 0 < a ≤ 1, 0 < X ≤ 1, 0 < Y ≤ 1, 0 < Z ≤ 1,
M Nd³⁺ oder Er³⁺ ist und 0 Gew.-% < M ≤ 0,01 Gew.-% ist.

2. Lumineszierendes Material nach Anspruch 1, wobei die Verbindung des lumineszierenden Materials, die durch die Formel ausgedrückt werden kann, durch Infrarot (IR) angeregt wird, um einen IR-Strahl zu emittieren.

3. Sicherheitstinte zur Verhinderung von Fälschung/Veränderung, die das lumineszierende Material nach Anspruch 1 enthält, wobei die Tinte 0,1 ~ 25 Gew.-% des lumineszierenden Materials bezogen auf ein Gesamtgewicht der Tinte einschließt.

4. Druckerzeugnis, das das lumineszierende Material nach Anspruch 1 enthält, wobei das Druckerzeugnis 0,1 ~ 25 Gew.-% des lumineszierenden Materials bezogen auf ein Gesamtgewicht des Druckerzeugnisses einschließt und das lumineszierende Material als ein Druckobjekt auf Druckmaterial aus Papier oder Polymerfolie druckbar ist.

5. Druckmaterial aus Papier oder Polymerfolie, das das lumineszierende Material nach Anspruch 1 enthält, wobei das Druckmaterial aus Papier oder Polymerfolie 0,1 ~ 25 Gew.-% des lumineszierenden Materials bezogen auf ein Gesamtgewicht des Druckmaterials aus Papier oder Polymerfolie einschließt..

6. Besagtes Papier nach Anspruch 5, wobei das Papier ausgewählt ist aus einer Gruppe bestehend aus Banknotenpapier, Geschenkkartenpapier und allgemeinem Papier, und die Polymerfolie ausgewählt ist aus einer Gruppe bestehend aus Polycarbonat, Polyester, Polyethylen, Polypropylen, Acrylnitril-Butadien-Styrol (ABS) und Styrol-Acrylnitril (SAN).

## Revendications

1. Matériau luminescent qui est un composé exprimable par la formule chimique suivante :
YbₐYₓV_{y}Si_{z}O₄ : M
où, 0 < a ≤ 1, 0 < X ≤ 1, 0 < Y ≤ 1, 0 < Z ≤ 1,
M est Nd³⁺ ou Er³⁺, et 0 % en poids < M ≤ 0,01 % en poids.

2. Matériau luminescent selon la revendication 1, dans lequel le composé de matériau luminescent exprimable par la formule est excité par IR (infrarouge) pour émettre un rayon IR.

3. Encre de sécurité préventive contre la contrefaçon/l'altération contenant le matériau luminescent selon la revendication 1, dans laquelle l'encre comporte 0,1 ~ 25 % en poids du matériau luminescent par rapport à un poids total de l'encre.

4. Matériel imprimé contenant le matériau luminescent selon la revendication 1, dans lequel le matériel imprimé comporte 0,1 ~ 25 % en poids du matériau luminescent par rapport à un poids total du matériel imprimé, et le matériau luminescent est imprimable comme un objet d'impression sur un matériau d'impression en papier ou en film polymère.

5. Matériau d'impression en papier ou en film polymère contenant le matériau luminescent selon la revendication 1, dans lequel le matériau d'impression en papier ou en film polymère comporte 0,1 ~ 25 % en poids du matériau luminescent par rapport à un poids total du matériau d'impression en papier ou en film polymère..

6. Papier susmentionné selon la revendication 5, dans lequel le papier est choisi parmi un groupe constitué de papier de billets de banque, de papier de cartes cadeaux et de papier ordinaire, et le film polymère est choisi parmi un groupe constitué de polycarbonate, de polyester, de polyéthylène, de polypropylène, d'ABS (acrylonitrile butadiène styrène) et de SAN (styrène-acrylonitrile).
